# EUROPEAN PATENT APPLICATION

(11) **EP 2 360 965 A1**
(43) Date of publication of application: **24.08.2011**
(21) Application number: 10290071.9
(22) Date of filing: 12.02.2010
(51) Int. Cl.: H04W 36/00

(54) **Handling of measurements for selecting a cell in a network**

(71) Applicant: ST-Ericsson SA, 1228 Plan-les-Ouates (CH)
(72) Inventor: Cardineau, Damien, 72000 Le Mans (FR); Josso, Nicolas, 72240 La Chapelle Saint Fray (FR); Le Ray, Erwan, 72100 Le Mans (FR)
(74) Representative: Cabinet Plasseraud

(57) **Abstract**

The present invention generally relates to devices and methods, in a cellular network, for measuring a power level for each one of a plurality of BCCH carriers emitted by neighbouring cells around a Mobile Set, in:
• dividing the plurality of carriers into at least a first group and a second group;
• handling measurements of the power level of each carrier included in the first group, so as the time lapsed between two consecutive measurements for each carrier is lesser than a first threshold;
• handling measurements of the power level of each carrier included in the second group, so as the time lapsed between two consecutive measurements for each carrier is lesser than a second threshold different from the first threshold.

## Description

### TECHNICAL FIELD

The present invention generally relates to devices and methods for handling measurements for selection and confirmation of a cell for a communication in a cellular telecommunication network.

### RELATED ART

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Public Land Mobile Networks (PLMN) are subdivided in cells, each served by a dedicated Base Station (BS). Different situations lead Mobile Sets (MS) to select a specific cell amongst available ones, deemed/considered suitable to provide a given service.

In the context of networks and user equipments complying with specifications established by 3rd Generation Partnership Project (3GPP) a Broadcast Control CHannel (BCCH) on a specific carrier is used in each cell to broadcast control signals and information on said cell. A Mobile Set must perform periodically a measurement of the power level of each BCCH carrier described in a BCCH Allocation list (BA List). A Mobile Set interacting with a typical network receives from the network a BA list comprising generally between 20 and 30 entries. This monitoring is managed by the Mobile Set, when the former is in idle or packet idle mode. It could lead the Mobile Set to select a new serving cell based on these measurements if several criteria are met.

This behaviour is described, in particular, in chapter 6.6.1 and in chapter 10.1.1.1 of the 3GPP Technical Specification 45.008 entitled "Radio subsystem link control". To comply with the requirements expressed by this specification, a Mobile set shall attempt to measure each BCCH carrier every 4 seconds at minimum. As a consequence, a Mobile Set must measure the power level of each BCCH carrier contained in the BA List at least every 4 seconds, whereas it only has to synchronize with BCCH carriers of the six strongest non-serving cells. Many measurements are therefore done needlessly, while increasing noticeably the power consumption of the Mobile Set.

To overcome this drawback, one might consider different known solutions. For example, the frequency of the measurements can be lowered at least in certain circumstances. This is the case when the Mobile Set is motionless or when the serving cell provides a very high level of Quality of Service (QoS). However, these solutions are efficient only in a limited number of situations. Moreover, lowering the number of measurements increases the risk for the Mobile Set to be unable to re-select a new cell immediately or briefly after having lost the link with the current serving cell.

### SUMMARY OF THE INVENTION

To address the needs expressed above, a first aspect of the present invention relates to a method, adapted to be carried out by a Mobile Set, for measuring a power level for each one of a plurality of carriers emitted by neighbouring cells around a Mobile Set. The method is notably applicable to the measurements of the power level of BCCH carriers. It comprises the following steps:
- splitting the plurality of carriers into at least a first group and a second group;
- handling first measurements of the power level of each carrier included in the first group, so as the time interval between two consecutive measurements for each carrier of said first group is smaller than a first threshold ;
- handling second measurements of the power level of each carrier included in the second group, so as the time interval between two consecutive measurements for each carrier of said second group is smaller than a second threshold, different from the first threshold.

A list of carriers to monitor, defined for example in the BA list received by the Mobile Set, is split into groups. To each group is associated a different time interval between two consecutive measurements of the power level for each carrier included in said group. Typically, the first group is associated to a smaller time interval between measurements than the second group. Stated otherwise, the carriers of the first group are measured more frequently than the carriers of the second group. Consequently, a smaller number of measurements are performed in comparison with a solution including / requiring measurements of all the carriers at a same pace. The power consumption of the Mobile Set is thus lowered.

In particular, the first group contains the BCCH carriers with the highest power level, whereas the second group contains all other BCCH carriers. The first group contains the carriers with which the mobile set have the most likeliness of synchronization, or stated otherwise, the carriers corresponding to the most appropriate cells to re-select if needed. By contrast, the second group contains the carriers with which the mobile set have the less likeliness of synchronization, or stated otherwise, the carriers corresponding to the less appropriate cells to re-select if needed. Thus, measurements are still done on all the BCCH carriers, hence ensuring a good knowledge of the neighboring cell context in static and dynamic conditions. But, since the strongest BCCH carriers, or the more suitable ones, are measured more frequently than the weakest BCCH carriers, or the less suitable ones, the power consumption of the Mobile Set is then reduced.

In one embodiment, the method further comprises updating the group assignment of at least some of the carriers according to their power level. It is thus possible to take into account the first and the second measurements performed previously to change the group to which any carrier is associated. It allows modifying the time interval between two consecutive measurements for each carrier based on/in view of its measured power level, if needed, for example following a change in the environment of the Mobile Set. For illustrative purpose only, this situation may arise when one carrier of the plurality with a low power level has been assigned initially to the second group. During the second measurements, its power level appears to be higher than before. According to this measurement, this carrier is then assigned to the first group, and removed from the second group. Hence, the time interval between two consecutive measurements for this carrier becomes different, better adapted to the new configuration.

Initially, the plurality of carriers can be defined in a list received by the Mobile Set, the first group comprising all the carriers included in said list. The second group can be initially empty. The list is, for example, the BCCH Allocation List received from the network by the Mobile Set.

The belonging of each carrier to the first group or to the second group may be updated according to at least one criterion and according to at least one sharing constraint between the first group and the second group. For example, the criterion for one carrier to belong to the first group is such that the power level of that carrier must be amongst the M highest of all carriers, M being an integer less than the total number of carriers considered. For example, the sharing constraint may be that the first group must comprise a limited number of carriers. In particular, the sharing constraint might depend on at least one parameter amongst the following:
- a number of cells surrounding the current serving cell;
- a number of entries in the first group and in the second group;
- a signal-to-noise ratio of a current serving cell;
- an indicator related to the serving cell, such as for instance a Bad Frame number indicator.

The criterion and the sharing constraint allow to have some flexibility and adaptability for the assignment of the carriers to the different groups. In particular, the number of carriers included in the first group may depend on the level of interferences in the current serving cell, or on the number of surrounding cells. Consequently, it is possible to adapt the measurement policy to the actual environment of the Mobile Set, either dynamically or statically, while reducing drastically the risk of a loss of service.

In one embodiment, the step of handling first measurements and the step of handling second measurements are carried out sequentially.

In another embodiment, the step of handling first measurements and the step of handling second measurements are interleaved.

The first threshold can be set so as the measurements performed during the step of handling first measurements are compliant with the requirements specified by the 3rd Generation Partnership Project Technical Specification 45.008 entitled "Radio subsystem link control".

A second aspect of the present invention relates to a computer program product comprising one or more stored sequences of instructions that are accessible to a processor and which, when executed by the processor, cause the processor to carry out the steps of method according to the first aspect defined above.

A third aspect of the present invention relates to a measurement management unit, adapted to carry out the method according to the first aspect of the invention, for measuring a power level for each one of a plurality of carriers emitted by neighbouring cells around a Mobile Set. The measurement management unit is configured to:
- splitting the plurality of carriers into at least a first group and a second group;
- handling first measurements of the power level of each carrier included in the first group, so as the time interval between two consecutive measurements for each carrier of said first group is lesser than a first threshold ;
- handling second measurements of the power level of each carrier included in the second group, so as the time interval between two consecutive measurements for each carrier of said second group is lesser than a second threshold, different from the first threshold.

A fourth aspect of the invention relates to a Mobile Set comprising a measurement management unit according to the third aspect of the invention.

The Mobile Set can be configured to use its maximum capabilities of measurements of power level, at least for handling the measurements of the power level of each carrier included in the first group. Thus, the measurement of the most relevant carriers is performed as quickly as possible.

### BRIEF DESCRIPTION OF THE DRAWINGS

The present invention is illustrated by way of example, and not by way of limitation, in the figures of the accompanying drawings, in which like reference numerals refer to similar elements and in which:
- Figure 1 is a block diagram of a Mobile Set, according to embodiments of the present invention;
- Figure 2 is a flow chart illustrating steps of the method for measuring carriers;
- Figure 3 is a timing chart of measurements performed on the carriers by the Mobile Set;
- Figure 4 is a schema of a cell network.

### DESCRIPTION OF PREFERRED EMBODIMENTS

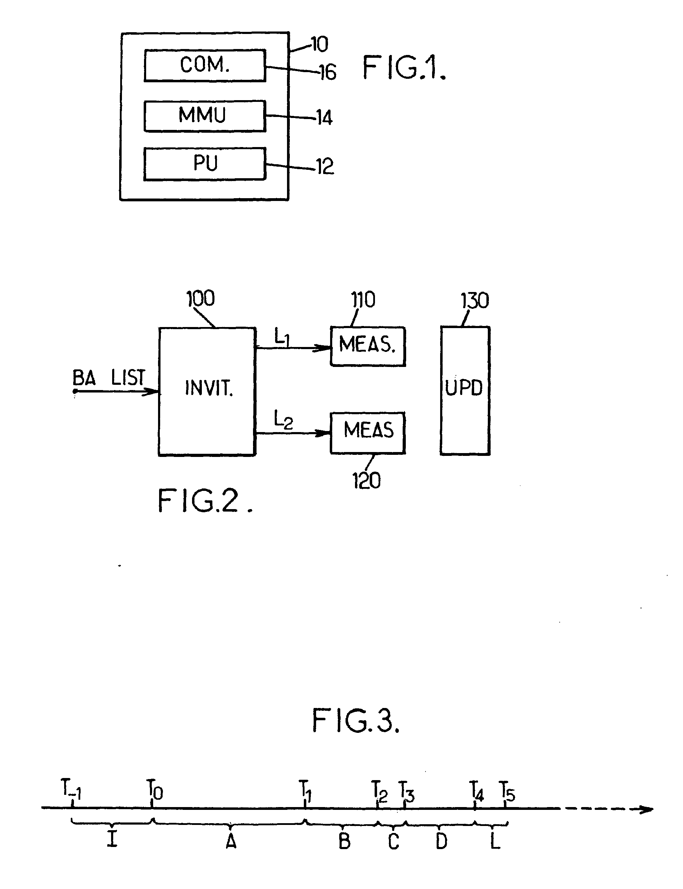

Referring to Figure 1, there is shown therein a block diagram of a Mobile Set 10. Typically, the Mobile Set 10 is a mobile phone complying with specifications established by 3GPP (3rd Generation Partnership Project).

The Mobile Set 10 comprises notably a processing unit 12, a measurement management unit 14, and communications means 16. In the description above, the architecture of the Mobile Set 10 includes two different units respectively for the processing unit 12 and for the measurement management unit 14. However, it will be understood by those skilled in the art that various other modifications may be made, and equivalents may be substituted, without departing from the scope of the present invention. In particular, the processing unit 12 and the measurement management unit 14 could be grouped for example in only one unit. The processing unit 12 and the communications means 16 are capable of sending or receiving phone calls or data through at least one cellular network.

The measurement management unit 14 is adapted to manage the handling of measurements of BCCH carriers. In particular, for each BCCH carriers included in the BCCH Allocation list, the measurement management unit 14 is adapted to plan the time interval between two consecutive measurements on each BCCH carrier. The measurements are carried by the Mobile Set 10 when the latter is in idle or packet idle mode.

Figure 2 illustrates the main steps of a method according to an embodiment for measuring carriers. The Mobile Set 10 and notably the measurement management unit 14 are adapted to implement the steps of this method.

The method receives from the network in input the BCCH Allocation list, comprising the frequencies of the BCCH carriers on neighbouring cells around the Mobile Set 10. Typically, the Mobile Set 10 receives from the network the BCCH Allocation list at the end of a previous cell re-selection process.

In a first step 100, the BCCH carriers are divided into at least a first group and a second group. The first group is described by a first sub-list L₁, whereas the second group is described by a second sub-list L₂, The first sub-list L₁ and the second sub-list L₂ are initialized upon reception of the BCCH Allocation list. The sub-first list L₁ is filled up with the frequencies of the BCCH carriers comprised in the BCCH Allocation list. The second sub-list L₂ is left empty and thus comprises no entry.

During a step 110, a first set S₁ of measurements of a power level is performed on each carrier included in the first sub-list L₁. Said measurements are repeated cyclically during step 110, so as, for a given carrier in the first sub-list L₁, the time interval between two consecutive measurements of the first set S₁ is smaller than a first threshold TH₁. In particular, according to an embodiment, the first threshold TH₁ is set so as the measurements performed during the step 110 are compliant with the requirements specified by the 3rd Generation Partnership Project Technical Specification 45.008 entitled "Radio subsystem link control", in particular as specified in chapter 6.6.1 and 10.1.1.1. For example, the first threshold TH₁ can be set to 3 seconds, since this 3GPP specification requires that, as the minimum, a Mobile Set shall take one measurement for each BCCH carrier for every 4 second.

During a step 120, a second set S₂ of measurements of a power level is performed on each carrier included in the second sub-list L₂. Said measurements are repeated cyclically during step 120, so as, for a given carrier included in the second sub-list L₂, the time interval between two consecutive measurements of the second set S₂ is smaller than a second threshold TH₂. In particular, according to an embodiment, the second threshold TH₂ is chosen to be greater than the first threshold TH₁. For example, the second threshold TH₂ can be set to 10 seconds, if the first threshold TH₁ is set to 2 seconds.

In an embodiment, the step 110 and the step 120 are carried out sequentially. All the measurements of the first set S₁ are realized, and then all the measurements of the second set S₂ are performed.

Alternatively, in another embodiment, the carrying-out of the step 110 and the step 120 are interleaved. One subset of the measurements of the first set S₁ are done, and then a subset of the measurements of the second set S₂ are performed, this sequence being repeated until all the measurements are performed.

In an embodiment, during the step 110 and step 120 the Mobile Set is configured to use its maximum capabilities of power measurements, in particular its maximum capabilities of power measurements per paging block, in order to obtain the measurements of the fisrt set S₁ and the second set S₂ as quickly as possible.

Periodically, the entries of the first sub-list L₁ and the second sub-list L₂ are updated in a step 130, in connection with the measurements carried out during the step 110 and 120.

In an embodiment, all the BCCH carriers comprised in the first sub-list L₁ and in the second sub-list L₂ are sorted by at least one criterion C. The criterion C is for example the power level of a carrier is one amongst the M highest, all carriers of the plurality being considered, M being an integer. The BCCH carriers are then shared out between the first-sub-list L₁ and the second sub-list L₂, taking into consideration sharing constraints SC. For example, the sharing constraints SC might be a limited number N of entries in the first sub-list L₁. In this last example, the first sub-list L₁ is updated by filling it up with the number N of BCCH carriers having the highest power level, whereas the second sub-list L₁ is filled up with all the carriers not included in the first sub-list L₁. Then, the first sub-list L₁ contains the carriers having the highest power level according to measurements performed during step 110 or 120.

The criterion C can be applied for a given carrier to the absolute power level of said carrier, to the power level of said carrier relatively to the power level of the current serving cell, or to the power level of said carrier relatively to the highest power level of all carriers.

The sharing constraints SC can depend on at least one parameter amongst the following non-exhaustive list:
- a number of cells surrounding the current serving cell;
- a number of entries in the first group and in the second group;
- the number of cells in the BA list;
- the number of cells in the first sub-list L₁ and in the second sub-list L₂;
- a signal-to-noise ratio of the current serving cell;
- an indicator related to the serving cell, for example Bad Frame Indicators.

For example, the number of entries of the first sub-list L₁ and of the second sub-list L₁ can be modified in accordance with these parameters. The number of entries in the first sub-list L₁ can be inversely proportional to the signal-to-noise ratio and/or proportional to the Bad Frame Indicators of the serving cell.

The step 130 is periodically carried out, for example:
- when all the carriers in the first sub-list L₁ have been measured during the step 110; and,
- when all the carriers in the second sub-list L₂ have been measured during the step 120.

Hence, the first sub-list L₁ and the second sub-list L₂ are regularly updated, insuring that they remain up-to-date, and that the adequate entries are spread over the first sub-list L₁ and the second sub-list L₂, in connection with the criterion C and the sharing constraints SC.

While the method has been illustrated and described with two sub-lists only, it will be understood by those skilled in the art that more than two sub-lists could be used, each sub-list being associated with a different set of measurements, without departing from the scope of the present invention.

Referring to Figure 3, there is shown therein, for illustrative purpose, a timing chart of measurements performed on the BCCH carriers by the Mobile Set 10. At a time T₋₁, a BCCH Allocation list is received by the Mobile Set 10. The first sub-list L₁ and the second sub-list L₂ are empty. During a period I, the step 100 is carried out. At a time T₀, the first sub-list L₁ is filled up with the frequencies of the BCCH carriers comprised in the BCCH Allocation list, and the second sub-list L₂ is empty. During a period A comprises between the time To and a time T₁, the step 110 is carried out. The first set S₁ of measurements is performed on all the BCCH carriers. For example, during the period A, the absolute power level of each BCCH carrier is measured every two seconds, at four different times. So, at time T₁, the absolute power level of all the BCCH carriers is known. At time T₁, the step 130 is carried on. The BCCH carriers are spread over the first sub-list L₁ and the second sub-list L₂. For example, the six BCCH carriers having the highest absolute power level are included in the first sub-list L₁, whereas the other BCCH carriers are included in the second sub-list L₂. During a period B comprises between the time T₁ and a time T₂, the step 110 is carried out. This time, only the power level of the BCCH carriers included in the first sub-set S₁ are measured. Then, during a period C comprised between the time T₂ and a time T₃, the step 120 is carried out. Only the power level of the BCCH carriers included in the second sub-set S₂ are measured. At time T₃, the step 130 is carried on. Then, during a period D comprised between the time T₃ and a time T₄, the step 110 is carried out, and during a period E comprised between the time T₄ and a time T₅, the step 110 is carried out. At time T₅, the step 130 is carried out. This sequence is repeated as long as necessary. It should be quoted that the step 130 can be performed also at time T₂ or T₄, or eventually at any time.

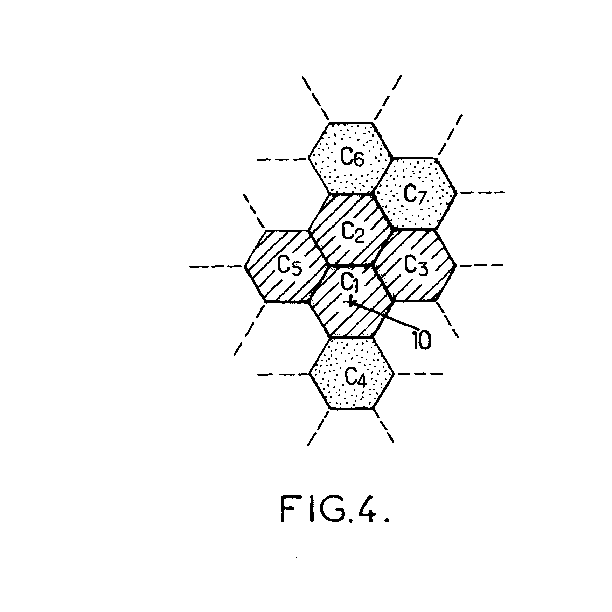

Referring to Figure 4, there is shown therein a schema of a cell network used to illustrate the following non-limiting use case of the method. The Mobile Set 10 is served by a cell C₁. During the selection process, the Mobile Set 10 has received the BA list from the cell C₁. For example, the BA list contains the frequencies of the carriers emitted by surrounding cells C₁, C₂, C₃, C₄, C₅, C₆ and C₇. Initially, the first sub-list L₁ contains the carriers of the cells C₁, C₂, C₃, C₄, C₅, C₆ and C₇. The second sub-list L₂ is empty. The power level of the cells included in the first sub-list L₁ is then measured, ensuring for example that the time interval between measurements are compliant with the requirements specified by the 3rd Generation Partnership Project Technical Specification 45.008 entitled "Radio subsystem link control". Then, the group assignment of the carriers is updated according to their power level. As illustrated in figure 4, the carriers corresponding to the cells C₁, C₂, C₃ and C₅ are assigned to the first sub-list (cells represented with a hachured background), whereas the carriers corresponding to the cells C₄, C₆ and C₇ are assigned to the second sub-list L₂ (cells represented with a dotted background). The time interval between measurements of the second sub-list L₂ is smaller than the time interval between measurements of the first sub-list L₁. Consequently, the time interval between measurements of the power level of carriers corresponding to the cells C₄, C₆ and C₇ is smaller than the time interval between measurements of the power level of carriers corresponding to the cells C₁, C₂, C₃ and C₅.

The present invention can also be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after either or both of the following a) conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the appended claims.

It is stipulated that the reference signs in the claims do not limit the scope of the claims, but are merely inserted to enhance the legibility of the claims.

## Claims

1. Method, adapted to be carried out by a Mobile Set (10), for measuring a power level for each one of a plurality of carriers respectively emitted by neighbouring cells surrounding a cell which is serving a Mobile Set (10), **characterized in that** the method comprises the following steps:
• splitting the plurality of carriers into at least a first group and a second group;
• handling first measurements (110) of the power level of each carrier included in the first group, so as the time interval between two consecutive measurements for each carrier of said first group is smaller than a first threshold ;
• handling second measurements (120) of the power level of each carrier included in the second group, so as the time interval between two consecutive measurements for each carrier of said second group is smaller than a second threshold, different from the first threshold.

2. Method according to claim 1, further comprising a step (130) of updating the group assignment of at least some of the carriers according to their power level.

3. Method according to claim 2, wherein the plurality of carriers is defined in a list received by the Mobile Set, the first group comprising initially all the carriers included in said list.

4. Method according to claim 3, wherein the second group is initially empty.

5. Method according to any one of claims 2-4, wherein the belonging of each carrier to the first group or to the second group is updated according to at least one criterion and according to at least one sharing constraint between the first group and the second group.

6. Method according to claim 5, wherein the criterion for one carrier to belong to the first group is such that the power level of that carrier must be amongst the M highest of all carriers, M being an integer less than the total number of carriers considered.

7. Method according to claim 5 or 6, wherein the sharing constraint is that the first group must comprise a limited number of carriers.

8. Method according to any of claims 5-7, wherein the sharing constraints depend on at least one parameter amongst the following:
• a number of cells surrounding the current serving cell;
• a number of entries in the first group and in the second group;
• a signal-to-noise ratio of a current serving cell;
• an indicator related to the serving cell.

9. Method according to any one of claims 1-8, wherein the step of handling first measurements (110) and the step of handling second measurements (120) are carried out sequentially.

10. Method according to any one of claims 1-8, wherein the step of handling first measurements (110) and the step of handling second measurements (120) are interleaved.

11. Method according to any one of claims 1-10, wherein the first threshold is set so as the first measurements performed are compliant with the requirements specified by the 3rd Generation Partnership Project Technical Specification 45.008 entitled "Radio subsystem link control".

12. A computer program product comprising one or more stored sequences of instructions that are accessible to a processor and which, when executed by the processor, cause the processor to carry out the steps of any of Claims 1 to 11.

13. Measurement management unit (14), adapted to carry out the steps of the method according to any one of claims 1-11, for measuring a power level for each one of a plurality carriers respectively emitted by neighbouring cells surrounding a cell which is serving a Mobile Set (10), **characterized in that** the measurement management unit (14) being configured to:
• splitting the plurality of carriers into at least a first group and a second group;
• handling first measurements (110) of the power level of each carrier included in the first group, so as the time interval between two consecutive measurements for each carrier of said first group is smaller than a first threshold ;
• handling second measurements (120) of the power level of each carrier included in the second group, so as the time interval between two consecutive measurements for each carrier of said second group is smaller than a second threshold, different from the first threshold.

14. Mobile Set comprising a Measurement management unit according to claim 13.

15. Mobile Set according to claim 14, configured to use its maximum capabilities of measurements of power level, at least for handling the measurements of the power level of each carrier included in the first group.
